Europäisches Patentamt

(19) European Patent Office

Office européen des brevets

(11) Publication number: **0 219 704**
**B1**

# (12) EUROPEAN PATENT SPECIFICATION

(45) Date of publication of the patent specification:
04.04.90

(51) Int. Cl.⁴: **A47L 15/42, B01J 49/00**

(21) Application number: 86113047.4

(22) Date of filing: 22.09.86

(54) Dishwasher having a water softener and a regenerator device therefor.

(30) Priority: 26.09.85 IT 4574585

(43) Date of publication of application:
29.04.87 Bulletin 87/18

(45) Publication of the grant of the patent:
04.04.90 Bulletin 90/14

(84) Designated Contracting States:
AT BE CH DE FR GB IT LI LU NL SE

(56) References cited:
DE-A- 1 517 510
DE-A- 1 913 591
DE-A- 2 630 164
DE-A- 2 636 054
DE-A- 3 015 727
DE-A- 3 209 563
DE-A- 3 303 161
FR-A- 1 420 017

(73) Proprietor: INDUSTRIE ZANUSSI S.p.A., Via Giardini Cattaneo 3, I-33170 Pordenone(IT)

(72) Inventor: Milocco, Claudio, Via Piero Gobetti 4, I-33170 Pordenone(IT)
Inventor: Sist, Rosa, Viale Grigoletti 116, I-33170 Pordenone(IT)

(74) Representative: Patentanwälte Grünecker, Kinkeldey, Stockmair & Partner, Maximilianstrasse 58, D-8000 München 22(DE)

## Description

The present invention relates to a dishwasher, particularly of the domestic type, the liquid circuit of which is provided with a feedwater softener and a device for regenerating the water softener.

Conventionally the water softener comprises a mass of ion exchange resin through which the water supplied to the dishwasher is made to flow, at least in part, so as to expedite the water supply phase.

The ion exchange resins are periodically regenerated by means of a quantity of brine in proportion to the hardness of the feedwater. To this purpose there is provided a salt container adapted to be supplied with a metered quantity of water and to supply the resulting brine to the water softener.

The volume of the brine can be metered by different methods. From Italian Patent IT-B 1 083 312 for instance it is known to meter the water required for the regeneration with a high precision by means of an open-top receptacle the overflow level of which can be linearly varied. A coarser adjustment may on the other hand be obtained in the manner described in GB Patent B 2 063 658 by employing a twin chamber metering receptacle in which the volume of the actually collected water may be increased by opening a vent passage provided at a suitable position of the receptacle.

From DE-A 2 630 164 a water softener is known having a salt container included in the inlet piping of an ion exchanger and being by-passed by a by-pass conduit in which an adjustable flow restriction valve is disposed.

These solutions have in common the shortcoming that the regeneration of the water softener is carried out with a volume of brine which is variable in proportion to the degree of hardness of the mains water, as already stated.

As a result, in the case of the mains water having a very high degree of hardness, the regeneration of the water softener is carried out with an increased amount of brine, part of which is then undesirably admitted to the washing tub, where it may give rise to corrosion problems which are difficult to overcome. Moreover, the regeneration phase cannot be carried out during the dishwashing operation, as would be desirable for preventing the brine from being distributed over the entire surface of the tub and of the dishes and other articles contained therein. The regeneration phase is therefore normally carried out separate from the dishwashing operation, whereby the overall operating cycle of the machine is indesirably lengthened.

It is an object of the present invention to provide a dishwasher equipped with an adjustable device for the regeneration of the water softener which is of a simple construction and does substantially not give rise to problems with respect to corrosion of the tub while permitting the regeneration to be carried out during any suitable phase of the dishwashing cycle.

According to the invention this object is attained in a dishwasher having a water softener disposed in its water supply circuit and a regenerating device comprising a salt container having an inlet adapted to be supplied with a metered quantity of water and an outlet connected to the water softener.

This dishwasher is mainly characterized in that it additionally comprises adjustable means operable to vary the mean length of the flow path of said metered quantity of water within said salt container from the inlet to the outlet of said salt container. The degree of the regeneration of the water softener may thus be controlled in response to the hardness of the water supply by varying the salt concentration of the brine instead of the volume of the brine.

The characteristics and advantages of the invention will become more clearly evident from the following description, given by way of example with reference to the accompanying drawings, wherein:

fig. 1 shows a diagrammatic illustration of the water supply circuit of a dishwasher in a preferred embodiment of the invention, and

fig. 2 shows a diagrammatic illustration of an enlarged detail of the circuit shown in fig. 1.

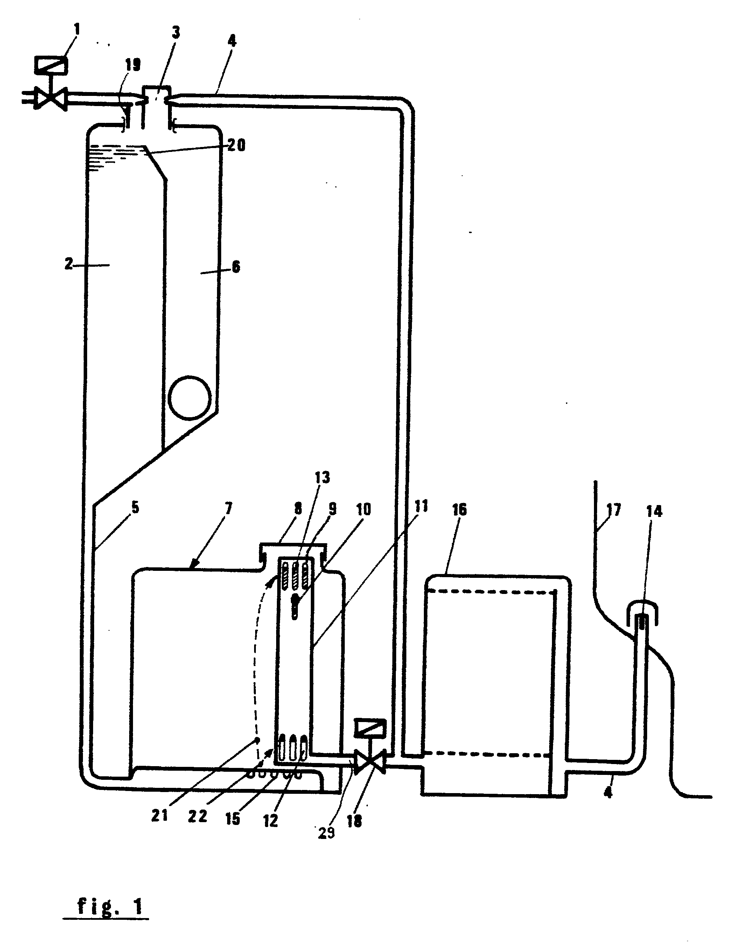

With reference to fig. 1, the dishwasher according to the invention comprises a supply pipe 4 for establishing communication from the water mains to the washing tub 17 of the machine via a solenoid inlet valve 1, an air gap section 3 and a water softener 16.

The terminal portion 14 of the supply pipe is preferably of a construction as described in EP-B 0 022 911.

Water losses occurring in air gap section 3 are recovered in a known manner by collection in a subjacent receptacle 6 the bottom of which is to be understood to be connected to washing tub 17. Upstream of air gap section 3 supply pipe 4 is provided with a calibrated branch conduit 19 for feeding water to a metering receptacle 2 communicating with collecting receptacle 6 via an overflow partition 20. A pipe 5 connects the bottom portion of metering receptacle 2 to the inlet of a salt container 7 the outlet 29 of which is connected to water softener 16 through a controllable solenoid valve 18. Solenoid valves 1 and 18 are controlled in a known manner by the program unit (not shown) of the machine.

The inlet of salt container 7 comprises a perforate inlet diffuser 15 preferably disposed on the bottom, while its outlet 29 is associated to a hollow outlet body 11 extending upwards within salt container 7.

Hollow outlet body 11 is formed with at least one upper port 9 distal of said diffuser 15 and at least one lower 12 adjacent diffuser 15. A sliding gate member 13 or a similar closure device is disposed within said hollow body 11 and is manually adjustable by means of a pin 10 for varying the respective opening of ports 9 and 12; this results in a linear variation in a range between a first and a second position, in which port 9 is completely closed and port 12 is completely open, respectively, and vice versa.

Hollow outlet body 11, or at least adjustment pin 10, is preferably located adjacent a cover 8 normally provided on container 7, so as to be readily accessible after removal of cover 8.

The operation of the dishwasher is substantially of the conventional kind and is therefore not described. It is merely noted that solenoid valve 1 is opened only during the phases of water supply to tub 17, so that a predetermined quantity of water is collected in receptacle 2, any excess of water overflowing into receptacle 6.

For regenerating the resins in water softener 16, only solenoid valve 18 is opened, so that the metered amount of water collected in receptacle 2 flows by gravity through pipe 5 to be passed through salt container 7 and from there into water softener 16.

When in this case port 9 is completely closed, the regenerating water leaving inlet diffuser 15 flows directly towards adjacent bottom port 12 through a small portion only of the salt contained in container 7. In this case, the mean flow path of the water within container 7 (diagrammatically indicated by arrow 22) is relatively short, so that the salt concentration in the brine supplied to water softener 16 is relatively low.

If on the other hand bottom port 12 is closed, the water passing through container 7 has to flow from inlet diffuser 15 to the more distant upper port 9 along a relatively long mean flow path indicated by arrow 21. In this case water softener 16 is thus supplied with brine having a higher salt concentration.

In view of the above explanations it is evident that, in proportion to the hardness of the feedwater, the salt concentration of the brine may be linearly varied between a minimum value and a maximum value corresponding respectively to the mean lengths of the flow paths 22 and 21 of the water within the salt container 7 from the inlet 15 to the outlet 29 of the salt container. The respective adjustment may be carried out in a simple manner by acting on pin 10 so as to obtain the optimum salt concentration for the regeneration of the resins contained in water softener 16.

On the other hand it is noted that the volume of water supplied for the regeneration is always constant, irrespective of the hardness of the mains water. This permits the entire water supply circuit of the dishwasher to be dimensioned with a high degree of precision; in particular, the volume of the regeneration water may be calculated so that the brine effectively fills the water softener 16 without overflowing therefrom into the washing tub, as is the object of the invention.

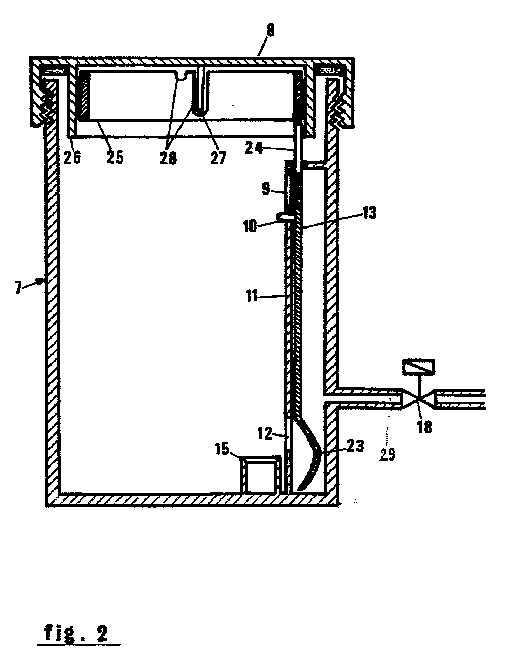

The adjustment of the opening of ports 9 and 12 may be further simplified by the modification shown in fig. 2, diagrammatically showing an enlarged cross-sectional view of salt container 7.

According to this modification as shown, the lower end portion 23 of sliding gate member 13 is of arcuate configuration, whereby sliding gate member 13 as a whole is resiliently biased upwards into engagement of a pin-shaped end portion 24 projecting above hollow outlet body 11 with an annular member 25. Annular member 25 is tightly seated in an annular projection 26 formed integrally with cover 8; its axial position is determined by a stop member 27 associated with cover 8 and adapted to selectively cooperate with notches 28 of different depth formed in annular member 25. Varying the depth of the notch 28 cooperating with stop member 27 results in a corresponding variation of the position of sliding gate member 13, and thus of the opening of ports 9 and 12, once cover 8 has been screwed down onto container 7.

For permitting a linear or continuous adjustment instead of the adjustment by discrete increments, it is sufficient to provide annular member 25 with a circumferentially varying height. In any case, the length of the mean flow path from inlet diffuser 15 through the mass of salt to outlet 29 may be readily adjusted without requiring access to the interior proper of the container.

The described dishwasher may of course be modified in various manners without thereby leaving the scope of the invention.

The adjustment of the ports 9 and 12 may for example be associated with the inlet diffuser 15 instead of with the hollow outlet body 11 of the salt container, or the distance from the inlet diffuser 15 to the hollow outlet body 11 may be varied in any other suitable manner within the scope of the claimed characteristics.

## Claims

1. A dishwasher having a water softener (16) disposed in its water supply circuit (4), and a regenerator device comprising a salt container (7) having an inlet (15) adapted to be supplied with a metered quantity of water, and an outlet (29) connected to said water softener (16), characterised in that it additionally comprises adjustable means (9–13) operable to vary the mean length of the flow path of said metered quantity of water within said salt container (7) from the inlet (15) to the outlet (29) of said salt container (7).

2. A dishwasher according to claim 1, characterised in that said adjustable means comprises a hollow outlet body (11) having at least one first and at least one second port (9, 12) in communication with the interior of said salt container (7) and adapted to establish between said inlet (15) and said outlet (29) of said salt container (7) a first and second flowpath (21, 22), respectively, of different lengths extending through said salt container (7), the opening of said ports (9, 12) being adjustable by means of an adjustable closure device (13) associated to said hollow outlet body (11).

3. A dishwasher according to claim 2, characterised in that said closure device comprises at least one sliding gate member (13) manually operable by means of a pin (10) located in proximity to a cover (8) provided for said salt container (7) in the known manner.

4. A dishwasher according to claim 2, characterised in that said closure device comprises at least one sliding gate member (13) adapted to resiliently engage an axially adjustable countersupport (25) carried by a cover (8) provided for said salt container (7) in the known manner.

## Patentansprüche

1. Geschirrspüler mit einem Wasserenthärter (16), der in seinem Wasserzuführkreis (4) angeordnet ist und mit einer Regeneriervorrichtung, die einen Salzbehälter (7) aufweist, der einen Einlaß (15) hat, der dazu eingerichtet ist, mit einer abgemessenen Wassermenge versorgt zu werden, und einen Auslaß (29) hat, der mit dem Wasserenthärter (16) verbunden ist, dadurch gekennzeichnet, daß er außerdem einstellbare Einrichtungen (9–13) enthält, die dazu dienen, die mittlere Länge des Strömungsweges der abgemessenen Wassermenge innerhalb des Salzbehälters (7) vom Einlaß (15) zum Auslaß (29) des genannten Salzbehälters (7) zu verändern.

2. Geschirrspüler nach Anspruch 1, dadurch gekennzeichnet, daß die einstellbare Einrichtung einen hohlen Auslaßkörper (11) enthält, der wenigstens eine erste und wenigstens eine zweite Öffnung (9, 12) hat, die mit dem Innenraum des Salzbehälters (7) in Verbindung sind und die dazu eingerichtet sind, zwischen dem Einlaß (15) und dem Auslaß (29) des Salzbehälters (7) einen ersten und einen zweiten Strömungsweg (21, 22) unterschiedlicher Längen einzurichten, die sich durch den Salzbehälter (7) erstrecken, wobei der Öffnungsumfang der genannten Öffnungen (9, 12) mittels einer einstellbaren Verschlußvorrichtung (13) verstellbar ist, die dem hohlen Auslaßkörper (11) zugeordnet ist.

3. Geschirrspüler nach Anspruch 2, dadurch gekennzeichnet, daß die genannte Verschlußvorrichtung wenigstens ein Verschlußschieberelement (13) enthält, das manuell mittels eines Stiftes (10) verstellbar ist, der nahe einem Deckel (8) angeordnet ist, der für den Salzbehälter (7) in bekannter Weise vorgesehen ist.

4. Geschirrspüler nach Anspruch 2, dadurch gekennzeichnet, daß die Verschlußvorrichtung wenigstens einen Verschlußschieber (13) enthält, der dazu eingerichtet ist, elastisch an einem einstellbaren Gegenlager (25) anzuliegen, das von einem Deckel (8) gehalten wird, der an dem Salzbehälter (7) in bekannter Weise vorgesehen ist.

## Revendications

1. Lave-vaisselle dans le circuit d'alimentation en eau (4) duquel est disposé un adoucisseur d'eau (16), un dispositif régénérateur comprenant un réservoir de sel (7) ayant une entrée (15) adaptée pour être alimentée avec une quantité dosée d'eau et une sortie (29) raccordée à l'adoucisseur d'eau (16), caractérisé en ce qu'il comporte en outre des moyens réglables (9–13) pour faire varier la longueur moyenne du trajet d'écoulement de cette quantité dosée d'eau à l'intérieur du réservoir de sel (7) depuis l'entrée (15) jusqu'à la sortie (29) de ce réservoir (7).

2. Lave-vaisselle selon la revendication 1, caractérisé en ce que ces moyens réglables comprennent un corps de sortie creux (11) ayant au moins un premier orifice (9) et au moins un deuxième orifice (12) communiquant avec l'intérieur du réservoir de sel (7) et adaptés pour établir entre l'entrée (15) et la sortie (29) de ce réservoir de sel (7) un premier trajet (21) et un deuxième trajet (22) de longueurs différentes s'étendant à travers ce réservoir de sel (7), l'ouverture de ces orifices (9, 12) étant réglable au moyen d'un dispositif de fermeture réglable (13) associé au corps de sortie creux (11).

3. Lave-vaisselle selon la revendication 2, caractérisé en ce que ce dispositif de fermeture comprend au moins une porte coulissante (13) pouvant être actionnée à la main au moyen d'une broche (10) disposée à proximité d'un couvercle (8) prévu sur le conteneur de sel (7) de manière connue.

4. Lave-vaisselle selon la revendication 2, caractérisé en ce que ce dispositif de fermeture comprend au moins une porte coulissante (13) adaptée pour coopérer élastiquement avec un contre-support axialement réglable (25) porté par un couvercle (8) prévu de manière connue pour le réservoir de sel (7).

fig. 1

fig. 2